# EUROPÄISCHE PATENTSCHRIFT

(11) **EP 3 795 304 B1**
(45) Veröffentlichungstag und Bekanntmachung des Hinweises auf die Patenterteilung: **28.02.2024**
(21) Anmeldenummer: 20190603.9
(22) Anmeldetag: 07.11.2016
(51) Int. Cl.: B25F 5/02

(54) **HANDWERKZEUGMASCHINE**
HAND-HELD MACHINE TOOL
MACHINE-OUTIL PORTATIVE

(30) Priorität: 24.11.2015 DE 102015223144; 11.05.2016 DE 102016208126
(43) Veröffentlichungstag der Anmeldung: 24.03.2021
(62) Teilanmeldung aus: 16791401.9
(73) Patentinhaber: Robert Bosch GmbH, 70442 Stuttgart (DE)
(72) Erfinder: Brennenstuhl, Jens, 73095 Albershausen (DE); Roehm, Heiko, 70176 Stuttgart (DE)

(56) Entgegenhaltungen:
- EP-A1- 2 072 192
- DE-A1- 4 204 420
- FR-A1- 2 916 320
- US-A1- 2014 159 662
- US-A1- 2014 326 477

## Beschreibung

Die vorliegende Erfindung betrifft eine Handwerkzeugmaschine nach Anspruch 1.

Elektrische Handwerkzeugmaschinen sind grundsätzlich bekannt und werden über einen Netzanschluss mit Strom versorgt. Alternativ ermöglichen Akkugeräte eine hohe Flexibilität beim Arbeiten, da sie insbesondere unabhängig von Netzstrom sind. Auf diese Weise können beispielsweise auch Außenarbeiten bequem durchgeführt werden, so dass bei einem Betrieb einer Handwerkzeugmaschine vielfach vorgesehen ist, Akkupacks einzusetzen.

Derartige Akkupacks sind grundsätzlich bekannt und weisen wiederaufladbare Akkumulatoren, in der Regel eine Mehrzahl von in Parallel- und/oder Reihenschaltung verbundenen Akkuzellen auf. Im Zuge dieser Anmeldung ist unter einem Akkupack somit ein vorzugsweise aus mehreren elektrisch zusammengeschalteten Akkuzellen bestehender Akkupack zu verstehen, der elektrische Energie speichern kann und die für den Betrieb einer Handwerkzeugmaschine benötigte Energie liefert. Es können beispielsweise drei in Reihe geschaltete, zylinderförmige Li-lonen-Zellen mit z.B. je 3,6 V zu einer Gesamtspannung von 10,8 V vorgesehen sein.

Aus dem Stand der Technik sind Handwerkzeugmaschinen bekannt, die beispielsweise zur Übermittlung von Daten, Parametern oder dergleichen eine Kommunikationsschnittstelle in Form einer Infrarotübermittlungseinrichtung verwenden. Durch diese Infrarotübermittlungseinrichtung sind entsprechende Daten zwischen Handwerkzeugmaschinen und einer externen Schnittstelle austauschbar. Dabei erweist es sich als nachteilig, dass derartige Infrarotübermittlungseinrichtungen nur begrenzt einsetzbar sind, da zum einen zwischen der Handwerkzeugmaschine und der externen Schnittstelle Hindernisse angeordnet sein können, die eine Übertragung verhindern, oder eine Bewegung des Nutzers die entsprechende Verbindung zumindest zeitweise unterbricht. Außerdem ist die derartige Infrarotverbindung nur für begrenzte Reichweiten einsetzbar. Bei fest integrierten Infrarotübermittlungseinrichtungen erweist es sich als nachteilig, dass ein Austausch der Infrarotübermittlungseinrichtungen oft nicht möglich und/oder der Austauschprozess aufwendig und kostenintensiv ist.

In der US 2014/159662 A1 wird ein Verfahren zum Laden eines Akkupacks und ein tragbares Ladesystem offenbart.

Aus der DE 42 04 420 A1 ist ein akkumulatorbetriebenes Elektrowerkzeug mit einem Gehäuse zur Aufnahme einer Antriebseinheit mit Getriebe zum Antrieb eines Werkzeugs bekannt. An einem Ende des Gehäuses ist ein Akku-Pack über einen Modulbaustein lösbar befestigt.

US 2014/326477 A1 beschreibt ein Werkzeug mit einem Gehäuse, mit einem im Gehäuse angeordneten Motor, mit einer mit dem Motor gekoppelten Antriebseinheit und mit einem Akkupack.

### Offenbarung der Erfindung

Aufgabe der Erfindung ist es, die oben genannten Nachteile zu verbessern und eine Handwerkzeugmaschine der eingangs genannten Art bereitzustellen, bei der eine Übermittlung von Daten, Parametern oder dergleichen von einer und an eine externe Steuerungseinheit mit einfachem konstruktivem Aufwand auch über größere Entfernungen sicher ermöglicht wird und gleichzeitig eine Anpassung an andere Gegebenheiten hinsichtlich einer entsprechenden Verbindung zwischen der Handwerkzeugmaschine und einer externen Steuereinheit schnell und leicht zur Verfügung gestellt werden kann. Ferner ist es Aufgabe der Erfindung eine Handwerkzeugmaschine zu offenbaren, bei der unter geringem Aufwand eine Kommunikationsschnittstelle für eine Handwerkzeugmaschine zur Verfügung gestellt, eingebaut und ausgetauscht werden kann, wobei der Einbau- und/oder der Austauschprozess möglichst einfach und kostengünstig durchführbar sein sollen.

Diese Aufgabe wird durch eine Handwerkzeugmaschine gemäß Anspruch 1 gelöst. Vorteilhafte Ausgestaltungen, Varianten und Weiterbildungen der Erfindung sind den Unteransprüchen zu entnehmen.

Gemäß der Erfindung ist eine Handwerkzeugmaschine offenbart, umfassend ein Gehäuse mit einem Handgriff, einen in dem Gehäuse angeordneten Antriebsmotor, und eine erste Schnittstelle, wobei die Schnittstelle dazu ausgelegt ist, Informationen von zumindest einer zweiten externen Schnittstelle zu empfangen und/oder an zumindest eine zweite externe Schnittstelle zu senden. Erfindungs-gemäß ist vorgesehen, dass das Gehäuse eine Aufnahmeöffnung aufweist, wobei die erste Schnittstelle herausnehmbar in der Aufnahmeöffnung angeordnet ist. Ferner ist die Aufnahmeöffnung durch einen Deckel lösbar verschließbar, wobei der Deckel das Gehäuse nach außen abschließt. Auf diese Weise kann die erste Schnittstelle lösbar an der Handwerkzeugmaschine angebracht werden, wobei die Aufnahmeöffnung einen einfachen und kostengünstigen Austausch der im Gehäuse der Handwerkzeugmaschine angeordneten Schnittstelle ermöglicht.

Vorteilhafterweise weist die Handwerkzeugmaschine ferner eine Steuerungseinheit innerhalb des Gehäuses auf. Die Steuerungseinheit kann einerseits mit dem Antriebsmotor und/oder mit dem Getriebe und/oder mit einer Akkupackelektronik eines Akkupacks in Kontakt stehen und andererseits mit der ersten Schnittstelle in elektronischem und/oder mechanischem Kontakt stehen und Informationen von der Schnittstelle empfangen und/oder senden.

Das Schnittstellengehäuse ist einteilig mit dem Gehäuse der Handwerkzeugmaschine ausgebildet. Vorteilhafterweise bildet das Schnittstellengehäuse die Aufnahmeöffnung unmittelbar in der Gehäusewand der Handwerkzeugmaschine aus, wobei die Aufnahmeöffnung topfförmig oder kastenförmig mit einer umlaufenden Seitenwandung und einer Bodenfläche ausgeführt sein kann. Dabei ist insbesondere von Vorteil, dass eine topfförmige Aufnahmeöffnung eine fast kreisförmige Öffnung aufweist, welche das durch die Öffnung grundsätzlich geschwächte Gehäuse der Handwerkzeugmaschine zusätzlich versteift. Die Bodenfläche weist ferner wenigstens eine Öffnung zum Durchführen von Verbindungselementen, beispielsweise wenigstens einer elektrischen Leitung, in Richtung anderer elektrischer Komponenten, wie beispielsweise der Steuerungselektronik und/oder der Akkupackelektronik auf. Alternativ oder zusätzlich ist denkbar, dass eine derartige Öffnung im Bereich der Seitenwandung ausgebildet ist.

Alternativ kann das Schnittstellengehäuse zweiteilig mit dem Gehäuse der Handwerkzeugmaschine ausgebildet und in der Aufnahmeöffnung ein Schnittstellengehäuse zur Aufnahme der Schnittstelle angeordnet sein. In einer besonders bevorzugten Ausführungsform bildet das Schnittstellengehäuse mit der Schnittstelle und dem Deckel ein eigenständiges Modul aus, welches lösbar innerhalb der Aufnahmeöffnung einbringbar ist. Dabei können insbesondere der Deckel und das Schnittstellengehäuse einteilig, alternativ auch zweiteilig ausgestaltet sein, wobei das Modul in die Aufnahmeöffnung der Handwerkzeugmaschine eingeführt und beispielsweise durch eine Schraubverbindung zwischen der Aufnahmeöffnung und dem Schnittstellengehäuse, oder durch andere Verbindungselemente lösbar befestigt werden. Auf diese Weise ist die gesamte Schnittstelle besonders kompakt ausgebildet und lässt sich schnell und einfach in der Handwerkzeugmaschine montieren, austauschen und/oder nachrüsten. Auf diese Art und Weise kann auch ein Austausch und/oder eine Reparatur schnell, einfach und kostengünstig erfolgen.

Das Schnittstellengehäuse kann im Gehäuse der Handwerkzeugmaschine befestigt oder alternativ auch in die Aufnahmeöffnung eingelegt und lediglich mit Hilfe des Deckels in der Aufnahmeöffnung gehalten werden. Vorzugsweise ist die Schnittstelle weitestgehend spielfrei, beispielsweise mittels einer Klickverbindung, in der Aufnahmeöffnung angeordnet, so dass keine Klappergeräusche oder dergleichen entstehen können und auch während des Betriebes ein versehentliches Lösen der Schnittstelle verhindert wird. Ferner ist es von Vorteil, wenn die Aufnahmeöffnung bzw. das Schnittstellengehäuse derart ausgeführt sind, dass das Einbringen der Schnittstelle nur auf eine Art und Weise erfolgen kann, so dass ein Falscheinbau der Kontaktplatine bzw. der Schnittstelle innerhalb der Aufnahmeöffnung der Handwerkzeugmaschine sicher verhindert werden kann.

Vorteilhafterweise ist der Deckel derart gekrümmt, dass er der Kontur der Gehäusewand folgt und bündig mit dieser abschließt. Der Deckel kann aus unterschiedlichen Kunststoffmaterialien wie beispielsweise Polyamid 6, Polyamid 66, PC (Polycarbonat), ABS (Acrylnitril-Butadien-Styrol-Copolymerisat) oder aus einem Materialmix verschiedener Kunststoffe, und/oder glasfaserverstärkt ausgeführt sein. Vorzugsweise weist der Deckel das gleiche Material auf wie das Gehäuse der Handwerkzeugmaschine.

Um einen sicheren, aber einfachen Zugang zur Aufnahmeöffnung und die darin angeordnete Schnittstelle zu ermöglichen, ist es von Vorteil, wenn der Deckel rotatorisch, insbesondere über einen Schraub- oder einen Bajonettverschluss lösbar verriegelt wird. Eine weitere Ausführungsform ist ein um eine Schwenkachse verschwenkbar gelagerter Deckel, welcher an der der Schwenkachse gegenüberliegenden Seite des Deckels durch Verrasten, Verschrauben, Verklemmen oder Verspannen an dem Gehäuse lösbar arretiert werden kann. Auf diese Weise kann wirksam einem möglichen Abfallen des Deckels vom Gehäuse oder einem Verlieren des Deckels entgegengewirkt werden. Der Deckel kann ferner eine schlitzförmige Vertiefung aufweisen, wodurch ein einfaches Öffnen des Deckels mittels einer Münze oder eines Schraubendrehers erfolgen kann. Der Bajonettverschluss lässt sich leicht betätigen und gewährleistet dennoch einen sicheren Verschluss der Aufnahmeöffnung. Zusätzlich oder alternativ kann der Deckel auch mittels wenigstens eines Verbindungselements, insbesondere mittels wenigstens einer Schraube, am Gehäuse befestigt werden.

In einer vorteilhaften Ausführungsform ist die Aufnahmeöffnung im Bereich des Handgriffes angeordnet. Der Handgriff dient als Auflagefläche für eine Hand eines Bedieners der Handwerkzeugmaschine und weist in der Regel eine Längsachse y, eine Vorderseite, die entlang einer Achse x in Richtung der Werkzeugaufnahme zeigt, eine Rückseite, und zwei Seitenflächen auf. Die Aufnahmeöffnung ist dabei insbesondere in einem Bereich unterhalb eines Bedienelements zum Ein- und Ausschalten bzw. zum Steuern des Antriebsmotors angeordnet. Vorzugsweise ist die Aufnahmeöffnung im Bereich einer der beiden Seitenflächen des Handgriffs, die im Wesentlichen parallel zur Längsachse der Handwerkzeugmaschine verläuft, angeordnet. Auf diese Weise wird die Bedienung der Handwerkzeugmaschine durch die Anordnung der Aufnahmeöffnung nicht gestört.

Wie in Anspruch 1 dargestellt, ist die Aufnahmeöffnung im Bereich des rückwärtigen Endes des Gehäuses der Handwerkzeugmaschine hinter dem Antriebsmotor angeordnet. Dies ist insbesondere dann von Vorteil, wenn die Handwerkzeugmaschine einen Steckakku aufweist, welcher mit seiner Akkupackelektronik und den im Steckakku angeordneten Akkuzellen in den Handgriff hineinragt. In diesem Fall weist die Handwerkzeugmaschine nur einen stark begrenzten Platz im Bereich des Handgriffes auf, so dass sich eine Anordnung der Aufnahmeöffnung für die Schnittstelle im Bereich des Handgriffes als schwierig erweisen kann. Ferner kann durch die Aufnahmeöffnung im Bereich des rückwärtigen Endes des Gehäuses der Handwerkzeugmaschine neben der ungestörten Bedienung der Handwerkzeugmaschine auch das Halten der Handwerkzeugmaschine ungehindert von der Aufnahmeöffnung erfolgen.

Bevorzugterweise weist die Schnittstelle ein Funkmodul auf, wobei das Funkmodul ein Funksignal basierend auf elektromagnetischen Wellen, beispielsweise ein Bluetooth-Signal, insbesondere ein Bluetooth Low Energy Signal, ein WLAN-Signal oder ein NFC-Signal empfängt und/oder sendet. Bei dem Funkmodul handelt es sich hierbei um eine elektrotechnische Komponente, die zur Herstellung einer Kommunikationsverbindung über ein Funknetz in verschiedensten Bereichen eingesetzt wird. So werden Funkmodule beispielsweise bereits für Anwendungen im so genannten Maschine-zu-Maschine (Machine-to-Machine, M2M) Umfeld verwendet, wie zum Beispiel im Bereich der Industrieautomatisierung, in Kraftfahrzeugen zur Unterstützung von Anwendungen im Bereich der Telematik oder auch zur Fernabfrage von Verbrauchszählern wie beispielsweise Strom-, Gas- oder Wasserzählern. Generell wird durch die Verwendung eines Funkmoduls ermöglicht, eine drahtlose Datenübertragung über ein Funknetz vorzunehmen, wodurch insbesondere Aufwände für eine anderenfalls erforderliche Verkabelung vermieden werden. Auf diese Weise kann eine Übermittlung von Daten, Parametern oder dergleichen von und an eine externe Schnittstelle mit einfachem konstruktivem Aufwand sicher ermöglicht werden.

Als bevorzugtes Ausführungsbeispiel eines solchen Funkmoduls kann beispielsweise ein WLAN-Modul, beispielsweise ein 868-MHz-Modul oder ein 915-MHz-Modul, oder auch ein Bluetooth-Modul verwendet werden. Weitere Arten von Funkmodulen sind ebenfalls verwendbar. Bei dem Funknetz kann es sich dabei um ein Kommunikationsnetz eines beliebigen drahtlosen Kommunikationsstandards handeln, wie beispielsweise WLAN (Wireless Local Area Network), Bluetooth, GSM (Global System for Mobile Communications), GPRS (General Packet Radio Service) oder UMTS (Universal Mobile Telecommunications System). Darüber hinaus finden insbesondere im Bereich der Industrieautomatisierung zunehmend speziell an die entsprechenden Anforderungen angepasste drahtlose Kommunikationsnetze mit vergleichsweise kurzer Reichweite Anwendung, die auch als "Wireless Personal Area Network (WPAN)" bezeichnet werden. Als Beispiele hierfür seien Funknetze nach einem der Standards IEEE 802.15.4 oder Wireless-HART genannt.

Vorteilhafterweise sendet ein aktives Funkmodul alle acht Sekunden ein Signal aus. Alternativ und in Abhängigkeit von der Energieversorgung kann das Signal auch in kürzeren oder auch in längeren Abständen ausgesendet werden. Insbesondere bei einer Energieversorgung durch einen zweiten Energiespeicher kann das Funksignal beispielsweise alle zehn, 20 oder 30 Sekunden ausgesendet werden, wohingegen bei einer Energieversorgung durch den ersten Energiespeicher das Funkmodul beispielsweise alle vier oder sogar jede Sekunde ein Signal aussendet. Das entsprechende Funkmodul der Übermittlungseinrichtung kann insbesondere seriell mit der Antriebssteuerung, einer Messeinrichtung zur Messung von diversen Werkzeugvariablen oder dergleichen verbunden sein. Solche Werkzeugvariablen sind beispielsweise die Motordrehzahl des Antriebmotors, ein Drehmoment, eine Drehrichtung, usw..

Um die Schnittstelle in einfacher Weise mit ausreichender Leistung versorgen zu können, ist gemäß einer bevorzugten Weiterbildung der Erfindung vorgesehen, dass das Funkmodul, insbesondere die Schnittstelle, über die Stromversorgung der Handwerkzeugmaschine mit Energie versorgt wird. Dies wird mittels einer lösbaren Anbindung der Schnittstelle an die Stromversorgung und/oder den Energiespeicher der Handwerkzeugmaschine gewährleistet.

Alternativ ist denkbar, dass das Funkmodul über einen eigenen Energiespeicher, der innerhalb des Schnittstellengehäuses angeordnet ist, verfügt, wobei das Funkmodul elektrisch mit der Stromversorgung der Handwerkzeugmaschine und/oder mit dem eigenen Energiespeicher verbunden ist. Erfindungsgemäß ist vorgesehen, dass das Funkmodul in dem Fall, in dem die Stromversorgung der Handwerkzeugmaschine vorhanden ist und über ausreichend Energie verfügt, über die Stromversorgung der Handwerkzeugmaschine mit Energie versorgt wird; und in jedem anderen Fall über den eigenen Energiespeicher versorgt wird. Auf diese Weise kann jederzeit einer Energieversorgung des Funkmoduls gewährleitstet werden.

Ferner ist es von Vorteil, wenn der Energiespeicher mittels Steck- oder Berührungskontakten mit dem Funkmodul verbunden ist, und wenn die Schnittstelle ferner eine federnde Beaufschlagung in Form eines elastischen Elementes aufweist, wodurch eine sichere elektrische Kontaktierung gewährleistet ist. Grundsätzlich kann vorgesehen sein, dass ein elastisches Element, beispielsweise ein Federelement, zwischen dem Deckel und dem Energiespeicher oder zwischen der Bodenfläche der Aufnahmeöffnung und dem Energiespeicher angeordnet ist, um den Energiespeicher bei geschlossenem Deckel gegen die innerhalb der Schnittstelle vorgesehenen Kontaktanschlüsse zu drücken. Vorteilhafterweise ist ein derartiger Energiespeicher, beispielsweise eine Knopfbatterie, austauschbar. Erfindungsgemäß kann dies durch Öffnen des Deckels erreicht werden, so dass ein Benutzer den Energiespeicher durch die Öffnung hindurch aus der Aufnahmeöffnung entnehmen und durch einen aufgeladenen Energiespeicher ersetzen kann. Vorteilhafterweise ist der Energiespeicher zwischen dem Funkmodul und dem Deckel und in seiner Haupterstreckungsebene parallel zur Längsachse y der Handwerkzeugmaschine angeordnet. Durch erneutes Verschließen des Deckels ist der Energiespeicher sicher innerhalb der Aufnahmeöffnung verwahrt. Ein Austausch der gesamten Schnittstelle nebst Funkmodul wird auf diese Weise umgangen und ein sicherer Betrieb der Schnittstelle wird auf einfache Art und Weise auf lange Zeit gewährleistet.

Alternativ kann der eigene Energiespeicher auch wieder aufladbar ausgeführt sein, wobei der Energiespeicher elektrisch mit einer Energieversorgung der Handwerkzeugmaschine verbunden oder verbindbar ist, um ein Aufladen des Energiespeichers zu gewährleisten. Weist die Handwerkzeugmaschine einen eigenen Energiespeicher in Form eines Akkupacks oder einen Netzanschlussstecker auf, so ist der eigene Energiespeicher der Schnittstelle durch die von dem Stromnetz oder dem Akkupack der Handwerkzeugmaschine zur Verfügung gestellten Energie wieder aufladbar. Vorteilhafterweise ist in diesem Fall eine Steuereinheit innerhalb der Schnittstelle vorgesehen, die in Abhängigkeit von der Energieversorgung der Handwerkzeugmaschine den eigenen Energiespeicher der Schnittstelle auflädt und/oder lediglich die Energieversorgung der Schnittstelle über die Energieversorgung der Handwerkzeugmaschine ermöglicht, wodurch ein dauerhafter Betrieb der Schnittstelle auf einfache Art und Weise gewährleistet werden kann.

Ferner ist es von Vorteil, wenn die Schnittstelle wenigstens eine Kontaktplatine aufweist, wobei in diesem Fall die Kontaktplatine das Funkmodul und die Steuerungseinheit der Handwerkzeugmaschine elektrisch miteinander verbindet und einen drahtgebunden oder drahtlosen Datenaustausch ermöglicht. Ferner kann die Kontaktplatine weiteren Raum für die Aufnahme von zusätzlichen elektrischen Einheiten wie beispielsweise für die oben genannte Steuereinheit zur Verfügung stellen. Diesbezüglich weist die Kontaktplatine wenigstens eine, vorzugsweise zwei Verbindungselemente, beispielsweise Steckverbinder für Steckkontakte auf, wobei wenigstens ein Verbindungselement den Datenaustausch und/oder die Energieversorgung mit oder durch die Steuerungseinheit der Handwerkzeugmaschine gewährleistet und/oder ein weiteres Verbindungselement den Datenaustausch und/oder die Energieversorgung von der Kontaktplatine zum Funkmodul über einen Berührungskontakt, beispielsweise einem SIM-Kartenkontakt, gewährleistet.

In einer alternativen Ausführungsform weist die Schnittstelle keine eigene Kontaktplatine auf, wobei in diesem Fall das Funkmodul und/oder der eigene Energiespeicher unmittelbar drahtlos oder drahtgebunden mit einem werkzeugseitigen Kontaktelement elektrisch verbunden sind. In einer weiteren Ausführungsform ist auch eine Anordnung der Schnittstelle innerhalb der Aufnahmeöffnung ohne eine Kontaktierung zur Handwerkzeugmaschine möglich, so dass die Handwerkzeugmaschine mittels des Funkmoduls zumindest geortet werden kann.

Bevorzugterweise weist die Schnittstelle des Weiteren wenigstens ein Dämpfungselement, insbesondere ein viskoelastisches Element auf, welches vorteilhafterweise ringförmig, beispielsweise als O-Ring oder -Steg ausgeführt und elastisch verformbar ist. Das Dämpfungselement kann dabei einstückig mit dem Schnittstellengehäuse, mit der Aufnahmeöffnung, mit dem Deckel, und/oder mit der Kontaktplatine, oder als separates Bauteil ausgebildet sein. Vorzugsweise ist das Dämpfungselement zwischen dem Deckel und der Kontaktplatine bzw. dem Funkmodul angeordnet. Alternativ oder zusätzlich kann das Dämpfungselement auch zwischen der Kontaktplatine bzw. dem Funkmodul und der Bodenfläche bzw. der Seitenwandung der Aufnahmeöffnung angeordnet werden. Dadurch wird gewährleistet, dass die Schnittstelle innerhalb der Aufnahmeöffnung und/oder innerhalb des Schnittstellengehäuses sicher vor äußeren Einflüssen geschützt ist.

Vorteilhafterweise ist die Kontaktplatine innerhalb der Aufnahmeöffnung oder innerhalb des Schnittstellengehäuses mittels Verrastung befestigt, wobei die Haltekraft durch das Dämpfungselement gewährleistet werden kann. Entsprechend kann die Aufnahmeöffnung und/oder das Schnittstellengehäuse eine Mehrzahl verschiedener Rastelemente aufweisen, mittels derer die Schnittstelle oder eine einzelne Komponente derselben im Schnittstellengehäuse oder innerhalb der Aufnahmeöffnung arretiert und weitestgehend spielfrei befestigt werden können.

Ferner ist es möglich, dass innerhalb der Aufnahmeöffnung und/oder an der Schnittstelle oder dem Schnittstellengehäuse Ausrichtungselemente, beispielsweise Rippen und Stege angeordnet sind, mittels derer eine eindeutige Anordnung bzw. Ausrichtung der Schnittstelle oder des Schnittstellengehäuses innerhalb der Aufnahmeöffnung ermöglicht werden kann. Somit kann auf einfache Art und Weise ein Falscheinbau verhindert werden.

Die erfindungsgemäße Handwerkzeugmaschine kann auch in einem Werkzeugsystem vorgesehen sein. Dementsprechend bildet auch eine Handwerkzeugmaschine zusammen mit einer externen Einheit, die eine zweite Schnittstelle aufweist, welche wiederum dazu ausgelegt ist, Informationen von der ersten Schnittstelle zu empfangen und/oder an die erste Schnittstelle zu senden, einen weiteren Gegenstand der Erfindung. Erfindungsgemäß kann vorgesehen sein, dass die externe Einheit ein Smartphone, eine elektronische Datenverarbeitungsanlage, ein elektrotechnisches Erzeugnis, wie beispielsweise ein Handleuchtgerät, ein Baustellenradio, eine Handwerkzeugmaschine und/oder ein Ladegerät ist.

Durch dieses Werkzeugsystem wird mit einfachem konstruktivem Aufwand und über größere Entfernungen ein sicherer Austausch von Daten, Parametern oder dergleichen zwischen der Handwerkzeugmaschine und der externen Einheit ermöglicht, wodurch eine Kontrolle bzw. ein Wechsel zwischen unterschiedlichen Betriebsmodi der Handwerkzeugmaschine erleichtert werden kann.

Unter einer Handwerkzeugmaschine sollen generell sämtliche Handwerkzeugmaschinen mit einem in Bewegung, beispielsweise in Rotation und/oder Schwingung versetzbaren Werkzeugträger, der von einem Antriebsmotor antreibbar ist, wie beispielsweise Stabschrauber, Akku-Bohrer, Schlagbohrmaschinen, Multifunktionswerkzeuge, und/ oder Bohrschrauber verstanden werden. Unter Übertragung elektrischer Energie soll in diesem Zusammenhang insbesondere verstanden werden, dass die Handwerkzeugmaschine über einen Akku und/oder über eine Stromkabelanbindung mit Energie versorgt wird.

Grundsätzlich können als Akkuzellen für einen Akkupack insbesondere Lithiumionenzellen verwendet werden, da es insbesondere bei Lithiumionenzellen möglich ist, mehrere Akkuzellen zu Akkuzellenblöcken zusammenzufassen, in denen mehrere Akkuzellen in einer Parallelschaltung verbunden sind. Dabei ist es besonders vorteilhaft, dass der Zellenhalter Akkuzellen mit verschiedenen Durchmessern und Längen aufnehmen kann, wodurch die Anwendung des Zellenhalters bzw. des Zellenträgers in unterschiedlichen Akkupacks erreicht werden kann.

Bei dem Elektromotor handelt es sich um einen EC-Motor. Derartige bürstenlose EC-Motoren sind zum einen nahezu wartungsfrei und ermöglichen durch ihren hohen Wirkungsgrad während eines Akkubetriebes eine längere Arbeitszeit pro Akkuladung, wodurch sie besonders effizient sind. Ferner können Handwerkzeugmaschinen mit EC-Motoren sehr kompakt und leicht gebaut werden, wobei es besonders vorteilhaft ist, dass auch weniger Wärmeverluste entstehen, wodurch die Geräte nicht so heiß werden wie vergleichbare Geräte, und damit langlebiger sind.

Weitere Merkmale, Anwendungsmöglichkeiten, Vorteile und Ausgestaltungen der Erfindung ergeben sich aus der nachfolgenden Beschreibung der Ausführungsbeispiele der Erfindung, welche in den Figuren dargestellt sind.

### Zeichnungen

Die Erfindung wird im Folgenden anhand von bevorzugten Ausführungsbeispielen näher erläutert. Die Zeichnungen sind schematisch und zeigen:
- Fig. 1: eine Seitenansicht einer erfindungsgemäßen Handwerkzeugmaschine mit einer ersten Ausführungsform einer in die Aufnahmeöffnung eingesetzten Schnittstelle;
- Fig. 2: eine perspektivische Ansicht der erfindungsgemäßen Handwerkzeugmaschine aus Fig. 1 mit Explosionsansicht der eingesetzten Schnittstelle;
- Fig. 3: eine Detailansicht der Schnittstelle aus Figur 2;
- Fig. 4: eine Schnittansicht durch eine Aufnahmeöffnung entlang der Achse y aus Fig. 1 mit einer zweiten in die Aufnahmeöffnung eingesetzten Ausführungsform einer Schnittstelle;
- Fig. 5: eine Schnittansicht durch eine Aufnahmeöffnung entlang der Linie A-A aus Fig. 1 mit der ersten in die Aufnahmeöffnung eingesetzten Ausführungsform einer Schnittstelle;
- Fig. 6: eine Schnittansicht durch eine Aufnahmeöffnung entlang der Linie A-A aus Fig. 1 mit einer dritten in die Aufnahmeöffnung eingesetzten Ausführungsform einer Schnittstelle;
- Fig. 7: eine perspektivische Ansicht einer Kontaktplatine einer Schnittstelle;
- Fig. 8: eine Seitenansicht einer erfindungsgemäßen Handwerkzeugmaschine mit einer vierten Ausführungsform einer eingesetzten Schnittstelle; und
- Fig. 9: eine perspektivische Ansicht der erfindungsgemäßen Handwerkzeugmaschine aus Fig. 8 mit einem abgenommenen Deckel.

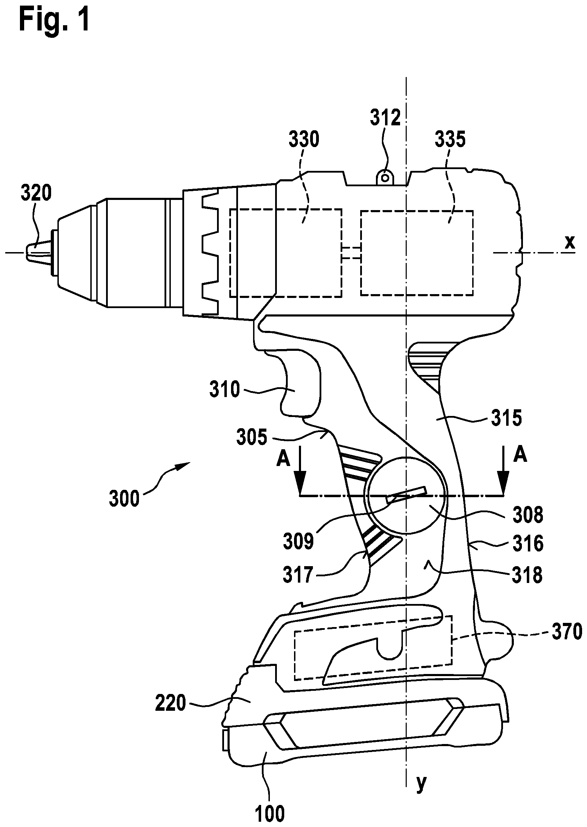

Die Figur 1 zeigt ein als Handwerkzeugmaschine 300 ausgebildetes Elektrogerät, welches beispielhaft als Akku-Bohrschrauber ausgebildet ist. Entsprechend ist die Handwerkzeugmaschine 300 in der dargestellten Ausführungsform zur netzunabhängigen Stromversorgung mechanisch und elektrisch mit einem Akkupack 100 verbunden. Es wird jedoch darauf hingewiesen, dass die vorliegende Erfindung nicht auf Akku-Bohrschrauber beschränkt ist, sondern vielmehr bei unterschiedlichen Handwerkzeugmaschinen 300 Anwendung finden kann, welche mit einem Akkupack 100 betrieben werden. Die Handwerkzeugmaschine 300 weist ein in einem Gehäuse 305 angeordnetes nicht dargestelltes Getriebe 330 zur Übertragung eines von einem ebenfalls nicht dargestellten Antriebsmotor 335 erzeugten Drehmomentes auf eine um eine Drehachse x rotierende Antriebswelle, an welcher eine Werkzeugaufnahme 320 befestigt ist, und einen Handgriff 315 auf. Die Handwerkzeugmaschine 300 weist innerhalb des Gehäuses 305 eine Steuerungseinheit 370 auf, welche in elektronischem und/oder mechanischem Kontakt mit dem Antriebsmotor 335 und/oder dem Getriebe 330 steht. Der Handgriff 315 dient als Auflagefläche für eine Hand eines Bedieners der Handwerkzeugmaschine 300 und weist in der Regel eine Längsachse y, eine Vorderseite 317, die entlang einer Achse x in Richtung der Werkzeugaufnahme 320 zeigt, eine Rückseite 316, und zwei Seitenflächen 318 auf. Der in Figur 1 dargestellte Akkupack 100 ist als Schiebeakkupack ausgeführt. Beim Anbringen des Akkupacks 100 an die Handwerkzeugmaschine 300 werden an der Handwerkzeugmaschine 300 vorgesehene Aufnahmemittel, z. B. Führungsnuten und Führungsrippen, mit korrespondierenden Führungselementen 110 des Akkupacks 100 in Eingriff gebracht, wobei der Akkupack 100 in einer Schieberichtung entlang der Aufnahmemittel des Handgriffs 315 eingeführt wird, und wobei der Akkupack 100 entlang einer unteren, im Wesentlichen senkrecht zur Längsrichtung y des Handgriffs 315 ausgerichteten Außenfläche des Handgriffs 315 in die Akkupackaufnahme einer Handwerkzeugmaschine 300 geschoben wird. In der in der Figur 1 gezeigten Position ist der Akkupack 100 an dem Handgriff 315 der Handwerkzeugmaschine 300 befestigt und durch Verriegelungsmittel verriegelt. Die Verriegelungsmittel umfassen unter anderem ein Verriegelungselement und ein Betätigungselement 220. Durch Betätigung des Betätigungsmittels 220 kann der Akkupack 100 von dem Handgriff 315 der Handwerkzeugmaschine 300 gelöst werden.

Ferner weist der Handgriff 315 eine Aufnahmeöffnung 307 zur Aufnahme einer Schnittstelle 380 auf. Die Schnittstelle 380 ist dazu ausgelegt, Informationen zu empfangen und an eine innerhalb des Gehäuses 305 angeordnete Steuerungseinheit 370 und/oder an eine zweite nicht dargestellte externe Schnittstelle zu senden. Die Aufnahmeöffnung 307 ist in einem Bereich unterhalb eines Bedienelements 310 zum Ein- und Ausschalten bzw. zum Steuern des Antriebsmotors 335 an einer der beiden Seitenflächen 318 angeordnet. Auf diese Weise wird die Bedienung der Handwerkzeugmaschine 300 durch die Anordnung der Aufnahmeöffnung 307 nicht gestört. Die Aufnahmeöffnung 307 ist in der dargestellten Ausführungsform topfförmig ausgeführt. Alternativ kann die Aufnahmeöffnung 307 auch andere Ausführungsformen, beispielsweise eine kastenförmige aufweisen.

Die dargestellte topfförmige Aufnahmeöffnung 307 weist eine umlaufende Seitenwandung 385 und eine Bodenfläche 381 auf. Dies hat insbesondere den Vorteil, dass die fast kreisförmige Aufnahmeöffnung 307 das grundsätzlich durch die Aufnahmeöffnung 307 geschwächte Gehäuse 305 der Handwerkzeugmaschine 300 zusätzlich versteift. Die Aufnahmeöffnung 307 ist mittels eines Deckels 308 verschließbar. Der Deckel 308 ist derart gekrümmt ausgeführt, dass er einer Kontur des Gehäuses 350 folgt und bündig mit dieser abschließt. Entsprechend kann der Deckel 308 aus unterschiedlichen Kunststoffmaterialien wie beispielsweise PA6 (Gebamid B), PA6.6 (Gebamid A), PC (Polycarbonat), ABS (Acrylnitril-Butadien-Styrol-Copolymerisat), oder aus einem Materialmix verschiedener Kunststoffe, und/oder glasfaserverstärkt ausgeführt sein, wobei es von Vorteil ist, wenn der Deckel 308 das gleiche Material aufweist wie das Gehäuse 305 und der Handgriff 315 der Handwerkzeugmaschine 300.

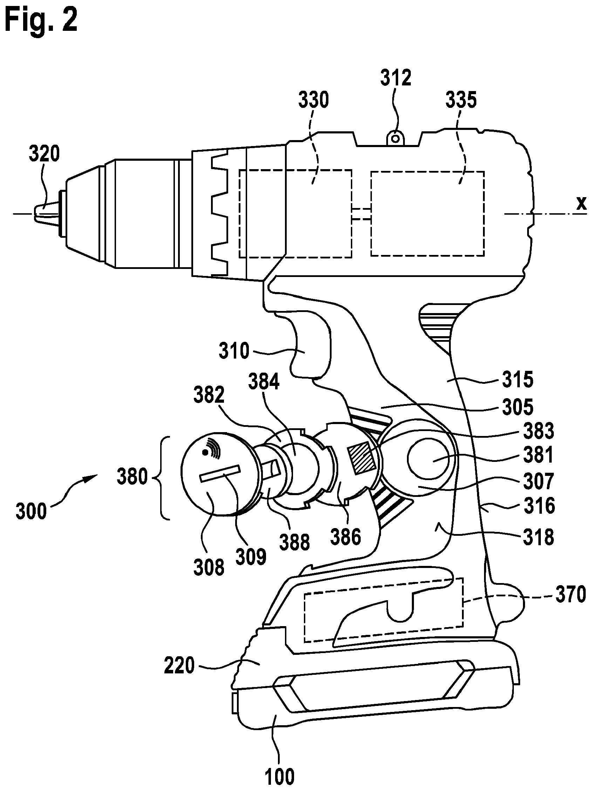

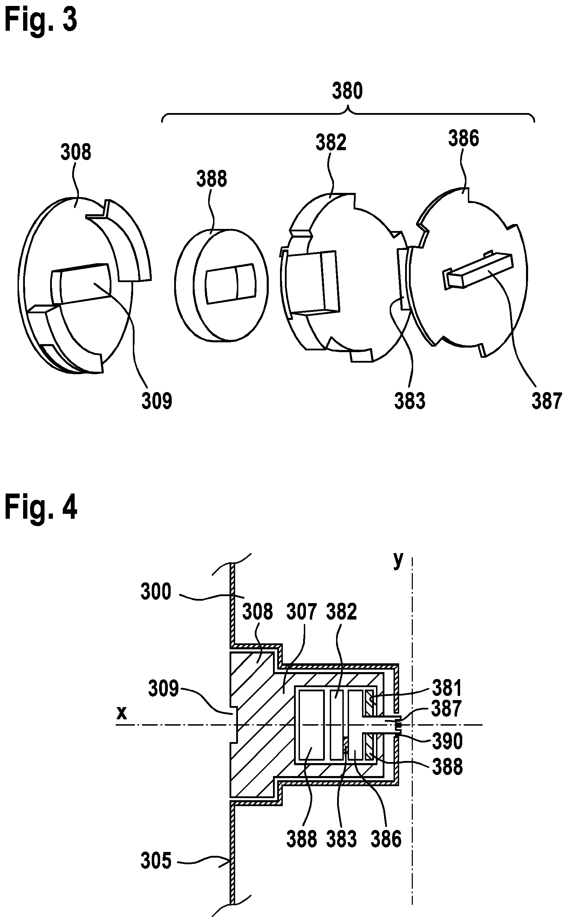

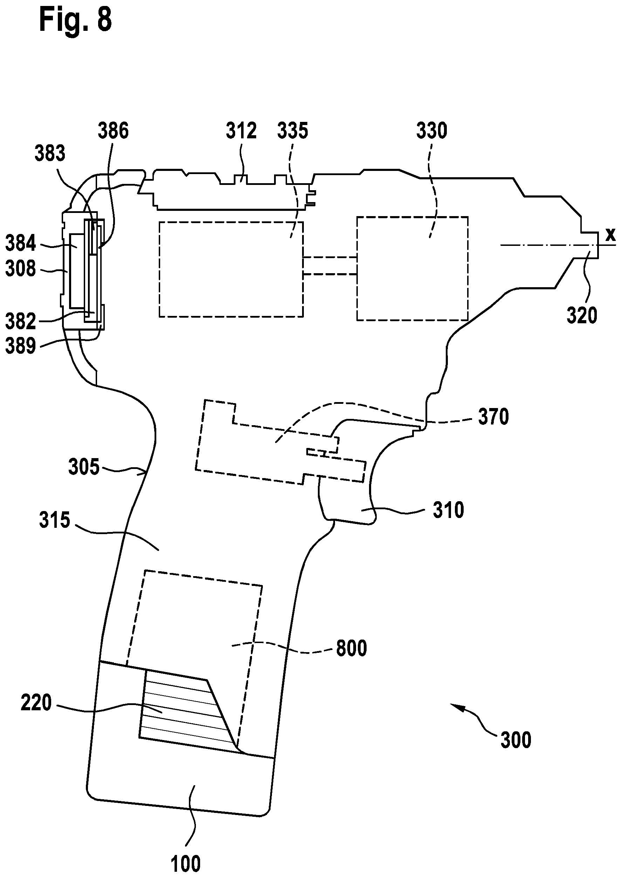

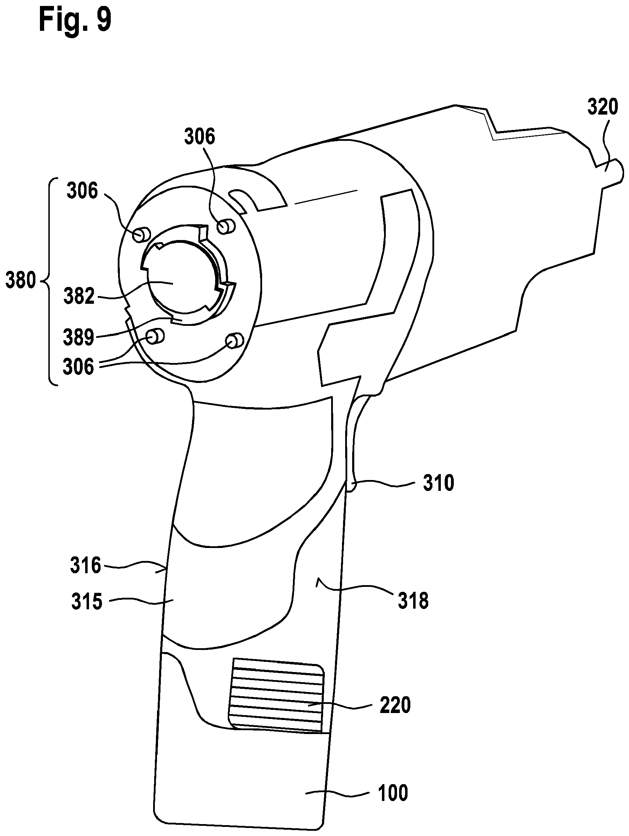

Um einen sicheren aber einfachen Zugang zur Aufnahmeöffnung 307 und die darin angeordnete Schnittstelle 380 zu ermöglichen, weist der Deckel 308 eine schlitzförmige Vertiefung 309 auf. Durch die schlitzförmige Vertiefung 309 kann der Deckel 308 beispielsweise mittels einer Münze oder eines Schraubendrehers geöffnet werden. Der Deckel 308 wird bei den in den Figuren 2 und 3 gezeigten Ausführungsformen rotatorisch, insbesondere über einen Bajonettverschluss, lösbar verriegelt. Wie in den Figuren 8 und 9 kann der Deckel 308 auch mittels wenigstens eines Verbindungselementes 306, insbesondere mittels wenigstens einer Schraube, am Gehäuse 305 verriegelt werden. Eine weitere, nicht dargestellte Ausführungsform ist ein um eine Schwenkachse verschwenkbar gelagerter Klappdeckel, welcher an der der Schwenkachse gegenüberliegende Seite durch Verrasten, Verschrauben, Verklemmen oder Verspannen an dem Gehäuse 305 lösbar arretiert werden kann. Durch einen derartigen Deckel 308 kann ein mögliches Abfallen oder ein Verlieren des Deckels 308 verhindert werden.

In Figur 2 ist eine perspektivische Ansicht der Handwerkzeugmaschine 300 aus Figur 1 dargestellt, wobei insbesondere eine in die Aufnahmeöffnung 307 lösbar eingesetzte Schnittstelle 380 in einer Explosionsansicht dargestellt ist. Die Schnittstelle 380 weist in der dargestellten Ausführungsvariante im Wesentlichen ein Dämpfungselement 388, einen eigenen Energiespeicher 384, ein Funkmodul 382, eine Kontaktplatine 386 und in der dargestellten Ausführungsform auch den Deckel 308 auf.

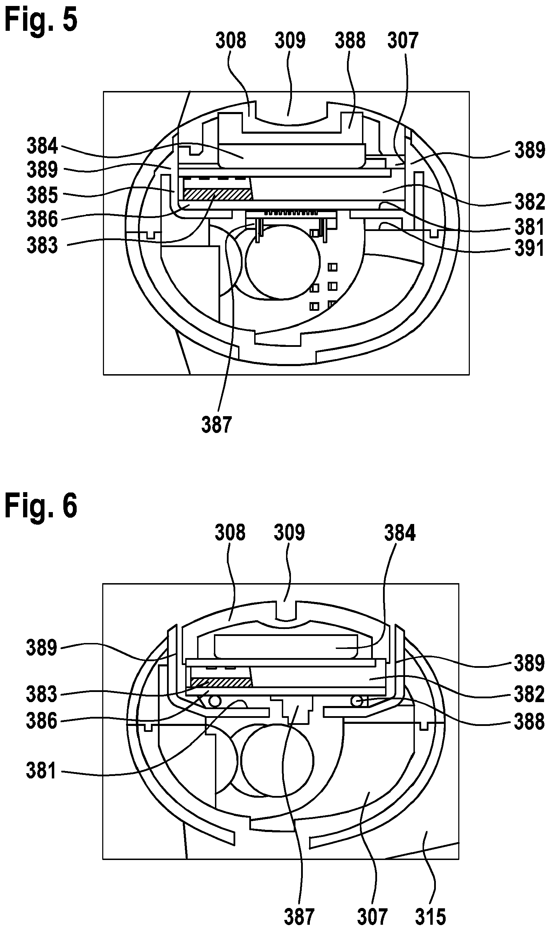

Die Aufnahmeöffnung 307 kann, wie in Figur 3 und 5 dargestellt, ein Schnittstellengehäuse 389 einteilig mit dem Gehäuse 305 ausbilden. Alternativ kann das Schnittstellengehäuse 389, wie in Figur 4 und 6 dargestellt, zweiteilig ausgebildet und zusammen mit dem Deckel 308 als Modul lösbar in die Aufnahmeöffnung 307 der Handwerkzeugmaschine eingeführt sein. Das Schnittstellengehäuse 389 kann im Gehäuse 305 der Handwerkzeugmaschine befestigt oder alternativ auch in die Aufnahmeöffnung 307 eingelegt und lediglich mit Hilfe des Deckels 308 in der Aufnahmeöffnung 307 gehalten werden. Die Schnittstelle 380 ist weitestgehend spielfrei, beispielsweise mittels einer Klickverbindung, in der Aufnahmeöffnung 307 angeordnet, wodurch Klappergeräusche oder dergleichen vermieden und ein versehentliches Lösen der Schnittstelle 380 verhindert werden kann.

Das Schnittstellengehäuse 389 weist ferner eine Bodenfläche 381 mit wenigstens einer Öffnung 390 zum Durchführen von Verbindungselementen 387, beispielsweise wenigstens einer elektrischen Leitung oder eines Steckkontaktes, in Richtung anderer elektrischer Komponenten, wie beispielsweise der Steuerungselektronik 370 und/oder der Akkupackelektronik 800 auf. Grundsätzlich, aber nicht dargestellt, kann alternativ oder zusätzlich eine derartige Öffnung 390 auch im Bereich der Seitenwandung 385 ausgebildet sein.

Die Schnittstelle 380 und insbesondere das Funkmodul 382 können mittels einer lösbaren Anbindung der Schnittstelle 380 an die Stromversorgung und/oder den Energiespeicher der Handwerkzeugmaschine 300 mit Energie versorgt werden (nicht dargestellt). Alternativ und wie in den Figuren dargestellt, verfügt die Schnittstelle 380 über einen eigenen Energiespeicher 384, der in der dargestellten Ausführungsform als Knopfbatterie ausgeführt und innerhalb des Schnittstellegehäuses 389 unmittelbar auf dem Funkmodul 382 und zwischen dem Deckel 308 und dem Funkmodul 382 in seiner Haupterstreckungsebene parallel zur Längsachse y der Handwerkzeugmaschine 300 angeordnet ist.

Zur Arretierung des Energiespeichers 384 weist die Schnittstelle 380 wenigstens ein elastisches Element auf, wobei das elastische Element beispielsweise in Form eines Federelementes zwischen dem Deckel 308 und dem Energiespeicher 384 und/oder zwischen einer Bodenfläche 381 des Schnittstellengehäuses 289 und der Kontaktplatine 386 angeordnet sein kann, um den Energiespeicher 384 bei geschlossenem Deckel 308 gegen die innerhalb der Schnittstelle 380 vorgesehenen Kontaktanschlüsse zu drücken, wodurch eine sichere elektrische Kontaktierung gewährleistet werden kann.

Der Energiespeicher 384 ist austauschbar, wobei dies durch Öffnen des Deckels 308 ermöglicht wird. Durch ein Verschließen des Deckels 308 ist der Energiespeicher 384 sicher innerhalb der Aufnahmeöffnung 307 verwahrt. Ein Austausch der gesamten Schnittstelle 380 nebst Funkmodul 382 wird auf diese Weise umgangen und ein sicherer Betrieb der Schnittstelle 380 wird für lange Zeit auf einfache Art und Weise gewährleistet.

Alternativ kann der eigene Energiespeicher 384 auch wieder aufladbar ausgeführt sein, wobei der Energiespeicher 384 elektrisch mit einer Energiequelle, beispielsweise mit dem Akkupack 100 oder der Stromnetzanbindung der Handwerkzeugmaschine 300 verbunden oder verbindbar ist, um ein Aufladen des Energiespeichers 384 zu gewährleisten. In Abhängigkeit von der Energieversorgung der Handwerkzeugmaschine 300 wird der Energiespeicher 384 der Schnittstelle 380 aufgeladen und/oder die Energieversorgung der Schnittstelle 380 wird unmittelbar über die Energieversorgung der Handwerkzeugmaschine 300 ermöglicht. Auf diese Weise kann ein dauerhafter Betrieb der Schnittstelle 380 auf einfache Art und Weise gewährleistet werden.

In Figur 3 ist die Schnittstelle aus Figur 2 im Detail und aus einer anderen Perspektive dargestellt. Das Funkmodul 382 ist dazu ausgelegt, ein Funksignal, beispielsweise ein Bluetooth-Signal, ein WLAN-Signal, ein akustisches Signal zu empfangen und/oder zu senden. Entsprechend kontaktiert das Funkmodul 382 über eine drahtlose oder drahtgebundene Verbindung die Steuerungseinheit 370, die Akkupackelektronik 800, und/oder diverse Messeinrichtungen zur Messung von Werkzeugvariablen. Solche Werkzeugvariablen sind beispielsweise die Motordrehzahl des Antriebmotors, ein Drehmoment, eine Drehrichtung, usw.. Vorteilhafterweise sendet ein aktives Funkmodul 382 alle zehn Sekunden ein Signal aus. Alternativ kann das Signal aber auch in kürzeren, beispielsweise alle vier Sekunden, oder auch längeren Abständen, beispielsweise alle 20 oder 30 Sekunden, ausgesendet werden.

Ferner weist die Kontaktplatine 386 elektrische Einheiten, Verbindungelemente 383, wie beispielsweise einen SIM-Kartenkontakt und/oder einen Steckverbinder 387 auf, um den Datenaustausch mit dem Funkmodul 382 und/oder mit der Steuerungseinheit 370 der Handwerkzeugmaschine 300 und/oder der Akkupackelektronik 800 des Akkupacks 100 zu gewährleisten. In einer nicht dargestellten alternativen Ausführungsform weist die Schnittstelle keine eigene Kontaktplatine 386 auf, wobei in diesem Fall das Funkmodul 382 und/oder der eigene Energiespeicher 384 unmittelbar drahtlos oder drahtgebunden mit einem werkzeugseitigen Kontaktelement elektrisch verbunden sind.

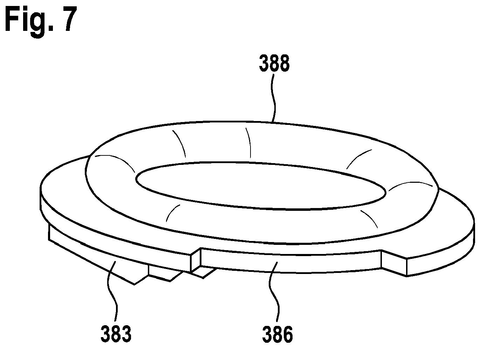

Das Dämpfungselement 388 kann ein viskoelastisches Element sein, welches vorteilhafterweise ringförmig, beispielsweise als O-Ring oder -Steg ausgeführt und elastisch verformbar ist. Das Dämpfungselement 388 kann einstückig mit dem Schnittstellengehäuse 389, mit der Aufnahmeöffnung 307, mit dem Deckel 308 und/oder mit der Kontaktplatine 386, oder als separates Bauteil ausgebildet sein. In der in den Figuren 2 bis 5 dargestellten Ausführungsvariante ist das Dämpfungselement 388 zwischen dem Deckel 308 und dem Funkmodul 382 bzw. dem Energiespeicher 384 angeordnet. Wie in Figur 6 und im Detail in Figur 7 dargestellt, kann das Dämpfungselement 388 zusätzlich auch zwischen der Kontaktplatine 386 und einer Bodenfläche 381 des Schnittstellengehäuses 389 angeordnet sein. Das Dämpfungselement 388 gewährleistet, dass die Schnittstelle 380 innerhalb der Aufnahmeöffnung 307 und/oder innerhalb des Schnittstellengehäuses 389 sicher vor äußeren Einflüssen geschützt ist.

In Figur 5 ist eine Schnittansicht durch die Aufnahmeöffnung 307 entlang der Linie A-A aus Fig. 1 dargestellt, wobei das Schnittstellengehäuse 389 einteilig mit dem Gehäuse 305 ausgebildet ist. Die Aufnahmeöffnung 307 ist topfförmig ausgestaltet und weist die Seitenwandung 385 und eine Bodenfläche 381 auf. In die Aufnahmeöffnung 307 ist die Schnittstelle 380 aus Figur 3 eingeführt, wobei die Schnittstelle 380 den Deckel 308, das Dämpfungselement 388, den Energiespeicher 384, sowie das Funkmodul 382 und die Kontaktplatine 386 aufweist. Ferner ragt einer der Steckverbinder 387 durch die Öffnung 390 in der Bodenfläche 381 hindurch, um einen Kontakt mit einem nicht dargestellten Kontaktelement der Handwerkzeugmaschine 300 herzustellen. Die Aufnahmeöffnung 307 und die Schnittstelle 380 werden mittels des lösbaren Deckels 308 abgedeckt. Der Deckel 308 ist derart gekrümmt, dass er der Kontur der Gehäusewand folgt und bündig mit dieser abschließt. Das Dämpfungselement 388 ist in der in Figur 5 dargestellten Ausführungsvariante zwischen dem Deckel 308 und dem Energiespeicher 384 angeordnet.

Im Gegensatz zu der in Figur 5 dargestellten zweiten Ausführungsform weist die in Figur 6 dargestellte dritte Variante eine Schnittansicht durch die Aufnahmeöffnung 307 entlang der Linie A-A aus Fig. 1 auf, wobei das Schnittstellengehäuse 389 zweiteilig ausgebildet und zusammen mit dem Deckel 308 als Modul lösbar in der topfförmigen Aufnahmeöffnung 307 der Handwerkzeugmaschine 300 eingeführt ist. Das Dämpfungselement 388 ist in der in Figur 6 dargestellten Ausführungsvariante zwischen der Bodenfläche 381 und der Kontaktplatine 386 angeordnet.

In Figur 7 ist die Kontaktplatine 386 zusammen mit dem Dämpfungselement 388 in einer perspektivischen Ansicht dargestellt. Das Dämpfungselement 388 ist einstückig und ringförmig ausgestaltet und unmittelbar auf einer ersten Seite der Kontaktplatine 386 aufgebracht. Auf einer zweiten Seite der Kontaktplatine 386 ist ein Verbindungselement 383 angeordnet.

Figur 8 zeigt eine Seitenansicht einer erfindungsgemäßen Handwerkzeugmaschine 300 mit einer vierten Ausführungsform einer eingesetzten Schnittstelle 380. Die Aufnahmeöffnung 307 ist im Bereich des rückwärtigen Endes des Gehäuses 305 der Handwerkzeugmaschine 300 hinter dem Antriebsmotor 335 angeordnet. Dies ist insbesondere dann von Vorteil, wenn die Handwerkzeugmaschine 300 wie dargestellt einen Steckakkupack 100 aufweist, welcher mit seiner Akkupackelektronik 800 und den im Steckakkupack 100 angeordneten Akkuzellen in den Handgriff 315 hineinragt. In diesem Fall weist die Handwerkzeugmaschine 300 nur einen stark begrenzten Platz im Bereich des Handgriffes auf, so dass sich eine Anordnung der Aufnahmeöffnung 307 zur Aufnahme der Schnittstelle 380 im Bereich des Handgriffes 315 als schwierig erweisen kann. Der Deckel 308 ist in dieser Variante mit Hilfe von Schrauben 383 an dem Gehäuse 305 der Handwerkzeugmaschine 300 lösbar befestigt. Wie in Figur 9 zu erkennen ist, ist unmittelbar unterhalb des Deckels 308 der Energiespeicher 384 auf dem Funkmodul 382 angeordnet. Durch eine derartige Anordnung der Schnittstelle 380 kann neben der ungestörten Bedienung der Handwerkzeugmaschine 300 auch das Halten der Handwerkzeugmaschine 300 ungehindert erfolgen.

Neben den beschriebenen und abgebildeten Ausführungsformen sind weitere Ausführungsformen vorstellbar, welche weitere Abwandlungen sowie Kombinationen von Merkmalen umfassen können.

## Patentansprüche

1. Handwerkzeugmaschine (300) umfassend ein Gehäuse (305) mit einem Handgriff (315), einen in dem Gehäuse (305) angeordneten Antriebsmotor (335), und eine erste Schnittstelle (380), wobei die Schnittstelle (380) dazu ausgelegt ist, Informationen von zumindest einer zweiten externen Schnittstelle (980) zu empfangen und/oder an zumindest eine zweite externe Schnittstelle (980) zu senden, wobei das Gehäuse (305) eine Aufnahmeöffnung (307) aufweist, wobei die Schnittstelle (380) herausnehmbar in der Aufnahmeöffnung (307) angeordnet ist; wobei die Aufnahmeöffnung (307) durch einen Deckel (308) lösbar verschließbar ist; und wobei der Deckel (308) das Gehäuse (305) nach außen abschließt,
**dadurch gekennzeichnet, dass**
die Aufnahmeöffnung (307) im Bereich des rückwärtigen Endes des Gehäuses (305) der Handwerkzeugmaschine (300) hinter dem Antriebsmotor (335) angeordnet ist.

2. Handwerkzeugmaschine (300) nach Anspruch 1, **dadurch gekennzeichnet, dass** in der Aufnahmeöffnung (307) ein Schnittstellengehäuse (389) zur Aufnahme der Schnittstelle (380) angeordnet ist.

3. Handwerkzeugmaschine (300) nach Anspruch 2, **dadurch gekennzeichnet, dass** das Schnittstellengehäuse (389) einteilig mit dem Gehäuse (305) der Handwerkzeugmaschine (300) ausgebildet ist.

4. Handwerkzeugmaschine (300) nach Anspruch 2, **dadurch gekennzeichnet, dass** das Schnittstellengehäuse (389) zweiteilig mit dem Gehäuse (305) der Handwerkzeugmaschine (300) ausgebildet ist.

5. Handwerkzeugmaschine (300) nach Anspruch 2, **dadurch gekennzeichnet, dass** das Schnittstellengehäuse (389) mit der Schnittstelle (380) und dem Deckel (308) ein Modul bilden, welches lösbar im Bereich der Aufnahmeöffnung (307) anbringbar ist.

6. Handwerkzeugmaschine (300) nach einem der Ansprüche 1 bis 3, **dadurch gekennzeichnet, dass** der Deckel (308) eine schlitzförmige Vertiefung (309) aufweist.

7. Handwerkzeugmaschine (300) nach einem der Ansprüche 1 bis 6, **dadurch gekennzeichnet, dass** der Deckel (308) rotatorisch, insbesondere über einen Schraub-, Klapp- oder einen Bajonettverschluss (304), oder mittels eines wenigstens eines Verbindungsmittels (306), insbesondere mittels wenigstens einer Schraube, am Gehäuse (305) verriegelt wird.

8. Handwerkzeugmaschine (300) nach einem der Ansprüche 1 bis 7, **dadurch gekennzeichnet, dass** die Schnittstelle (380) ein Funkmodul (382) aufweist.

9. Handwerkzeugmaschine (300) nach einem der Ansprüche 1 bis 8, **dadurch gekennzeichnet, dass** die Schnittstelle (380) einen eigenen Energiespeicher (384) aufweist und/oder über die Stromversorgung der Handwerkzeugmaschine (300) mit Energie versorgt wird.

10. Handwerkzeugmaschine (300) nach Anspruch 9, **dadurch gekennzeichnet, dass** der Energiespeicher (384) austauschbar und/oder wieder aufladbar ist.

11. Handwerkzeugmaschine (300) nach einem der Ansprüche 1 bis 10, **dadurch gekennzeichnet, dass** die Schnittstelle (380) wenigstens eine Kontaktplatine (386) aufweist.

12. Handwerkzeugmaschine (300) nach einem der Ansprüche 1 bis 11, **dadurch gekennzeichnet, dass** die Schnittstelle (380) zum Datenaustausch mit einer Steuerungseinheit (370) und/oder einer Akkupackelektronik (800) eines Ackupacks (100) drahtgebunden oder drahtlos verbunden ist.

13. Handwerkzeugmaschine (300) nach einem der Ansprüche 1 bis 12, **dadurch gekennzeichnet, dass** die Schnittstelle (380) wenigstens ein Dämpfungselement (388), insbesondere ein viskoseelastisches Element, aufweist.

14. Handwerkzeugmaschine (300) nach Anspruch 13, **dadurch gekennzeichnet, dass** das Dämpfungselement (388) zwischen dem Deckel (308) und dem Funkmodul (382) und/oder zwischen der Schnittstelle (380) und einer Bodenfläche (381) des Schnittstellengehäuses (389) angeordnet ist.

15. Handwerkzeugmaschine (300) nach einem der Ansprüche 1 bis 14, **dadurch gekennzeichnet, dass** die Schnittstelle (380) ein Funksignal, ein Bluetooth-Signal, insbesondere Bluetooth Low Energy Signal, ein WLAN-Signal, ein optisches Signal oder ein akustisches Signal empfängt und/oder sendet.

16. Werkzeugsystem, umfassend eine Handwerkzeugmaschine (300) nach einem der Ansprüche 1 bis 15 sowie eine externe Einheit (900), **dadurch gekennzeichnet, dass** die externe Einheit (900) die zweite Schnittstelle (980) aufweist, die dazu ausgelegt ist, Informationen von der ersten Schnittstelle (380) zu empfangen und/oder an die erste Schnittstelle (380) zu senden.

17. Werkzeugsystem nach Anspruch 16, **dadurch gekennzeichnet, dass** die externe Einheit (900) ein Smartphone oder eine elektronische Datenverarbeitungsanlage ist.

## Claims

1. Hand-held power tool (300) comprising a housing (305) with a handle (315), a drive motor (335), which is arranged in the housing (305), and a first interface (380), wherein the interface (380) is designed to receive information from at least a second, external interface (980) and/or to transmit information to at least a second, external interface (980), wherein the housing (305) has a receiving opening (307), wherein the interface (380) is arranged in the receiving opening (307) in a removable manner; wherein the receiving opening (307) can be closed by a cover (308) in a releasable manner; and wherein the cover (308) closes off the housing (305) towards the outside,
**characterized in that**
the receiving opening (307) is arranged in the region of the rear end of the housing (305) of the hand-held power tool (300) downstream of the drive motor (335).

2. Hand-held power tool (300) according to Claim 1, **characterized in that** an interface housing (389) for receiving the interface (380) is arranged in the receiving opening (307).

3. Hand-held power tool (300) according to Claim 2, **characterized in that** the interface housing (389) is designed in one part with the housing (305) of the hand-held power tool (300).

4. Hand-held power tool (300) according to Claim 2, **characterized in that** the interface housing (389) is designed in two parts with the housing (305) of the hand-held power tool (300).

5. Hand-held power tool (300) according to Claim 2, **characterized in that** the interface housing (389), the interface (380) and the cover (308) form a module that can be fitted in a releasable manner in the region of the receiving opening (307).

6. Hand-held power tool (300) according to one of Claims 1 to 3, **characterized in that** the cover (308) has a slot-like recess (309).

7. Hand-held power tool (300) according to one of Claims 1 to 6, **characterized in that** the cover (308) is rotationally locked to the housing (305), in particular by way of a screw closure, hinged closure or a bayonet closure (304), or by means of at least one connecting means (306), in particular by means of at least one screw.

8. Hand-held power tool (300) according to one of Claims 1 to 7, **characterized in that** the interface (380) has a radio module (382).

9. Hand-held power tool (300) according to one of Claims 1 to 8, **characterized in that** the interface (380) has a dedicated energy store (384) and/or is supplied with power by way of the power supply of the hand-held power tool (300).

10. Hand-held power tool (300) according to Claim 9, **characterized in that** the energy store (384) is exchangeable and/or rechargeable.

11. Hand-held power tool (300) according to one of Claims 1 to 10, **characterized in that** the interface (380) has at least one contact board (386).

12. Hand-held power tool (300) according to one of Claims 1 to 11, **characterized in that** the interface (380) is connected by wires or wirelessly to a control unit (370) and/or to a rechargeable battery pack electronic unit (800) of a rechargeable battery pack (100) for the purpose of data exchange.

13. Hand-held power tool (300) according to one of Claims 1 to 12, **characterized in that** the interface (380) has at least one damping element (388), in particular a viscoelastic element.

14. Hand-held power tool (300) according to Claim 13, **characterized in that** the damping element (388) is arranged between the cover (308) and the radio module (382) and/or between the interface (380) and a bottom surface (381) of the interface housing (389).

15. Hand-held power tool (300) according to one of Claims 1 to 14, **characterized in that** the interface (380) receives and/or transmits a radio signal, a Bluetooth signal, in particular a Bluetooth Low Energy signal, a WLAN signal, an optical signal or an acoustic signal.

16. Tool system comprising a hand-held power tool (300) according to one of Claims 1 to 15 and an external unit (900), **characterized in that** the external unit (900) has the second interface (980), which is designed to receive information from the first interface (380) and/or to transmit information to the first interface (380).

17. Tool system according to Claim 16, **characterized in that** the external unit (900) is a smartphone or an electronic data-processing system.

## Revendications

1. Machine-outil portative (300) comprenant un boîtier (305) avec une poignée (315), un moteur d'entraînement (335) agencé dans le boîtier (305), et une première interface (380), l'interface (380) étant conçue pour recevoir des informations d'au moins une deuxième interface externe (980) et/ou pour envoyer des informations à au moins une deuxième interface externe (980), le boîtier (305) présentant une ouverture de réception (307), l'interface (380) étant agencée dans l'ouverture de réception (307) de manière à pouvoir être extraite ; l'ouverture de réception (307) pouvant être fermée de manière amovible par un couvercle (308) ; et le couvercle (308) fermant le boîtier (305) vers l'extérieur,
**caractérisée en ce que**
l'ouverture de réception (307) est agencée dans la zone de l'extrémité arrière du boîtier (305) de la machine-outil portative (300) derrière le moteur d'entraînement (335) .

2. Machine-outil portative (300) selon la revendication 1, **caractérisée en ce qu'**un boîtier d'interface (389) est agencé dans l'ouverture de réception (307) pour recevoir l'interface (380).

3. Machine-outil portative (300) selon la revendication 2, **caractérisée en ce que** le boîtier d'interface (389) est réalisé d'un seul tenant avec le boîtier (305) de la machine-outil portative (300).

4. Machine-outil portative (300) selon la revendication 2, **caractérisée en ce que** le boîtier d'interface (389) est réalisé en deux parties avec le boîtier (305) de la machine-outil portative (300).

5. Machine-outil portative (300) selon la revendication 2, **caractérisée en ce que** le boîtier d'interface (389) avec l'interface (380) et le couvercle (308) forment un module qui peut être monté de manière amovible dans la zone de l'ouverture de réception (307).

6. Machine-outil portative (300) selon l'une quelconque des revendications 1 à 3, **caractérisée en ce que** le couvercle (308) présente un renfoncement en forme de fente (309).

7. Machine-outil portative (300) selon l'une quelconque des revendications 1 à 6, **caractérisée en ce que** le couvercle (308) est verrouillé sur le boîtier (305) par rotation, notamment par l'intermédiaire d'une fermeture à vis, à clapet ou à baïonnette (304), ou au moyen d'au moins un moyen de liaison (306), notamment au moyen d'au moins une vis.

8. Machine-outil portative (300) selon l'une quelconque des revendications 1 à 7, **caractérisée en ce que** l'interface (380) présente un module radio (382).

9. Machine-outil portative (300) selon l'une quelconque des revendications 1 à 8, **caractérisée en ce que** l'interface (380) présente son propre accumulateur d'énergie (384) et/ou est alimentée en énergie par l'intermédiaire de l'alimentation électrique de la machine-outil portative (300).

10. Machine-outil portative (300) selon la revendication 9, **caractérisée en ce que** l'accumulateur d'énergie (384) est remplaçable et/ou rechargeable.

11. Machine-outil portative (300) selon l'une quelconque des revendications 1 à 10, **caractérisée en ce que** l'interface (380) présente au moins une carte de contact (386).

12. Machine-outil portative (300) selon l'une quelconque des revendications 1 à 11, **caractérisée en ce que** l'interface (380) est reliée par fil ou reliée sans fil à une unité de commande (370) et/ou à une électronique de bloc d'accumulateurs (800) d'un bloc d'accumulateurs (100) pour l'échange de données.

13. Machine-outil portative (300) selon l'une quelconque des revendications 1 à 12, **caractérisée en ce que** l'interface (380) présente au moins un élément amortisseur (388), notamment un élément viscoélastique.

14. Machine-outil portative (300) selon la revendication 13, **caractérisée en ce que** l'élément amortisseur (388) est agencé entre le couvercle (308) et le module radio (382) et/ou entre l'interface (380) et une surface inférieure (381) du boîtier d'interface (389) .

15. Machine-outil portative (300) selon l'une quelconque des revendications 1 à 14, **caractérisée en ce que** l'interface (380) reçoit et/ou envoie un signal radio, un signal Bluetooth, notamment un signal Bluetooth Low Energy, un signal WLAN, un signal optique ou un signal acoustique.

16. Système d'outil, comprenant une machine-outil portative (300) selon l'une quelconque des revendications 1 à 15, ainsi qu'une unité externe (900), **caractérisé en ce que** l'unité externe (900) présente la deuxième interface (980) qui est conçue pour recevoir des informations de la première interface (380) et/ou pour envoyer des informations à la première interface (380).

17. Système d'outil selon la revendication 16, **caractérisé en ce que** l'unité externe (900) est un smartphone ou un équipement électronique de traitement de données.
